# EUROPÄISCHE PATENTSCHRIFT

(11) **EP 2 394 232 B1**
(45) Veröffentlichungstag und Bekanntmachung des Hinweises auf die Patenterteilung: **29.07.2020**
(21) Anmeldenummer: 10702835.9
(22) Anmeldetag: 02.02.2010
(51) Int. Cl.: G06F 21/12, G06F 21/57, G06F 21/62

(54) **VORRICHTUNG UND VERFAHREN ZUM VERHINDERN VON UNAUTORISIERTER VERWENDUNG UND/ODER MANIPULATION VON SOFTWARE**
DEVICE AND METHOD FOR PREVENTING UNAUTHORIZED USE AND/OR MANIPULATION OF SOFTWARE
DISPOSITIF ET PROCÉDÉ EMPÊCHANT L'UTILISATION ET/OU LA MANIPULATION ILLICITES DE LOGICIELS

(30) Priorität: 03.02.2009 DE 102009007258
(43) Veröffentlichungstag der Anmeldung: 14.12.2011
(73) Patentinhaber: Fresenius Medical Care Deutschland GmbH, 61352 Bad Homburg (DE)
(72) Erfinder: STAHL, Thomas, 97839 Esselbach (DE); SÜNKEL, Jürgen, 61352 Bad Homburg (DE)
(74) Vertreter: Bobbert & Partner Patentanwälte PartmbB
(86) Internationale Anmeldenummer: PCT/EP2010/000629
(87) Internationale Veröffentlichungsnummer: WO 2010/089083

(56) Entgegenhaltungen:
- EP-A2- 0 961 193
- EP-A2- 1 273 996
- EP-A2- 1 770 584
- WO-A2-2004/090730
- JP-A- 2009 104 380
- US-B1- 6 895 506

## Beschreibung

Die vorliegende Erfindung betrifft ein Rechnersystem, welches eine nicht autorisierte Verwendung von Software gemäß Anspruch 1 verhindert oder zumindest erschwert. Weiterhin betrifft die Erfindung ein Rechnersystem gemäß dem Oberbegriff des Anspruchs 10, ein Verfahren zum Ersetzen oder Ergänzen einer Software oder eines Anwendungsprogramms einer insbesondere medizinischen Vorrichtung gemäß dem Oberbegriff des Anspruchs 14, sowie eine Vorrichtung gemäß dem Oberbegriff des Anspruchs 15.

Medizinische und andere Geräte oder Vorrichtungen (die Begriffe "Vorrichtung" und "Geräte" werden im Folgenden synonym verwendet) enthalten heute regelmäßig umfangreiche Gerätesoftware. Aufgrund hoher Sicherheitsanforderungen müssen Manipulationen an der Software verhindert werden, um ihre vorgesehene Funktion sicher gewährleisten zu können. Zudem ist Software als ein signifikantes wirtschaftliches Gut anzusehen, so dass auch ihre unautorisierte Verwendung verhindert werden soll.

In der Praxis ist es regelmäßig erforderlich, Geräte-Software durch weiterentwickelte Versionen hiervon zu aktualisieren; sei es weil verbesserte Versionen erstellt wurden, weil die mit ihr betriebene Vorrichtung zusätzliche Funktionen erfüllen soll oder aus anderen Gründen. Bei medizinischen Geräten ist ein Aktualisieren der Software u. a. dann erforderlich, wenn neue oder bessere Behandlungsverfahren verfügbar sind und diese mittels der Software implementiert werden sollen. Das entsprechende Gerät befindet sich dann jedoch bereits beim Anwender bzw. Endnutzer. Aus Gründen der Wirtschaftlichkeit wird die neue Software im Stand der Technik beispielsweise per E-Mail oder Internet-Download zur Verfügung gestellt bzw. mittels eines Speichermediums, wie z.B. einer Memory-Card oder einer Compact Disk, über den Versandweg verteilt. Der Verteilprozess ist nicht immer vollständig kontrollierbar, so dass unberechtigte Kopien angefertigt werden können bzw. durch einen Reengineering Prozess wichtige Verfahren analysierbar sind, was einen erheblichen wirtschaftlichen Schaden darstellen kann. Zudem ist nicht sichergestellt, dass Geräte, für welche die neue Softwareversion gerade nicht geeignet ist, nach einem sog. Software-Update oder -Upgrade versehentlich oder absichtlich doch mit ihr betrieben werden.

EP 1 273 996 A2 offenbart einen sicheren Bootloader zum Sichern digitaler Geräte.

US 6,895,506 B1 offenbart ein Verfahren, um Programme zur Prozessorkontrolle sicher zu speichern und zu starten.

WO 2004/090730 A2 offenbart eine programmgesteuerte Einheit.

JP 2009-104380 A offenbart eine Vorrichtung und ein Verfahren, um einen nichtautorisierten Zugriff auf einen Roboter zu verhindern.

EP 0 961 193 A2 offenbart eine sichere Rechnervorrichtung.

EP 1 770 584 A2 offenbart ein programmierbares Steuersystem und eine entsprechende Vorrichtung zur Entwicklungsunterstützung eines Steuerprogramms.

Aufgabe der Erfindung ist es, eine Vorrichtung und ein Verfahren zum Verhindern von unautorisierter Verwendung und/oder Manipulation von Software anzugeben.

Die erfindungsgemäße Aufgabe wird durch ein Rechnersystem mit den Merkmalen des Anspruchs 1 gelöst.

Erfindungsgemäß wird ein Rechnersystem vorgeschlagen, das einen Boot-Loader mit mindestens einem nicht auslesbaren Entschlüsselungsalgorithmus für eine ladbare Software sowie mindestens einem nicht auslesbaren Dekodierungsschlüssel für diese Software aufweist. Das Rechnersystem kann, vorzugsweise in medizinischen Vorrichtungen oder Geräten, zum Ersetzen von ladbarer Software verwendet werden. Das Rechnersystem kann die ladbare Software umfassen. Es kann jedoch auch nur zu deren Aufnahme (Laden) vorbereitet sein, ohne dass die Software Teil des Rechnersystems ist.

Unter einem Rechnersystem kann erfindungsgemäß ein Computersystem oder eine Datenverarbeitungseinrichtung aus mehreren, zum Teil oder ganz von einander unabhängigen Rechnern und/oder Komponenten wie Speichereinrichtungen bestehen. Das Rechnersystem kann auch als ein einzelner Rechner ausgestaltet sein.

Ein Boot-Loader, auch Startmanager genannt, ist ein im Controller des Rechnersystems gespeichertes Softwareprogramm, das beim Starten eines Rechnersystems üblicherweise als erstes Programm ausgeführt wird. Es ist bislang hauptsächlich für das Laden des Betriebssystems oder des Anwendungsprogramms verantwortlich, indem es alle notwendigen Schritte veranlasst, damit das Betriebssystem in den Speicher, auch Haupt- oder Arbeitsspeicher genannt, geladen und nachfolgend gestartet werden kann. Nach dem Starten des Betriebssystems wird der Boot-Loader beendet, der Betriebssystemkern übernimmt die Kontrolle des Rechnersystems zum Initialisieren der Hardwarekomponenten und zum Starten der Anwendungsprogramme. Einfache und ältere Rechnersysteme enthalten keinen Boot-Loader, sondern starten das Betriebssystem oder andere Programmcodes direkt aus einem eingebrannten Speicherbaustein (z.B. EPROM) heraus, indem dieser Speicherbaustein direkt mit dem Bus des Controllers des Rechnersystems verbunden wird. Moderne Controller besitzen dagegen einen Boot-Loader, den es in vielfältiger Ausprägung gibt.

Der Boot-Loader kann im Folgenden erfindungsgemäß in bestimmten Ausführungsformen auch als ein Controller oder ein Speichermedium des Rechnersystems verstanden werden, welches den Boot-Loader aufweist.

Unter "Controller" im Sinne der vorliegenden Erfindung wird ein Hardware-Element in dem Rechnersystem verstanden, das verschiedene elektronische Bauteile aufweisen kann, beispielsweise den Controller-Chip und Speicher-Chips.

Unter "Controller-Chip" im Sinne der vorliegenden Erfindung wird das zentrale Element des Controllers verstanden, das die Steuerung (Steuerungsbefehle) der verschiedenen Hardware-Bausteine, die der Controller steuert (oder regelt bzw. überwacht), ausgibt. Es kann einen oder mehrere Controller-Chips auf einem Controller geben, die beispielsweise von einem Host-Controller-Chip gesteuert werden.

Unter "Software" im Sinne der vorliegenden Erfindung werden vorliegend ausführbare Programme verstanden, jedoch sind darunter erfindungsgemäß u.a. auch Bibliotheken, z.B. Direct Link Libraries (DLL), oder Dateien mit vorgegebener Struktur, z.B. ein Default Registry, und andere bekannte Datenstrukturen zu verstehen. Erfindungsgemäß wird unter dem Begriff Software auch ein beliebiger Entschlüsselungsalgorithmus oder ein Dekodierungsschlüssel verstanden.

Ein Entschlüsselungsalgorithmus kann als das Gegenstück zu einem Verschlüsselungsalgorithmus ausgestaltet sein. Verschlüsselungsalgorithmus und Entschlüsselungsalgorithmus treten üblicherweise paarweise auf.

Beide können gleich sein.

Beide unterscheiden sich in einer erfindungsgemäßen Ausführungsform nur in der Reihenfolge ihrer Abarbeitung.

Sie können sich aber auch grundlegend unterscheiden. Bei der Erfindung wird in einer erfindungsgemäßen Ausführungsform davon ausgegangen, dass die Software zuvor an anderer Stelle mittels eines nicht näher beschriebenen Algorithmus verschlüsselt wurde wie dies im Stand der Technik bekannt und üblich ist.

Die Software kann im Boot-Loader des Rechnersystems oder mittels des Boot-Loaders im - beispielsweise medizinischen - Gerät mittels eines gespeicherten Algorithmus, dem Entschlüsselungsalgorithmus, entschlüsselt werden. Der Entschlüsselungsalgorithmus wird als nicht auslesbar ausgeführt, zum Schutz vor unberechtigter Verwendung des Entschlüsselungsalgorithmus, was zur Erhöhung der Sicherheit beitragen kann.

Dabei kann der Entschlüsselungsalgorithmus aus dem Stand der Technik bekannt sein; in diesem Fall muss er nicht in einem gesperrten Bereich abgelegt werden, er kann dort jedoch optional abgelegt werden. Vorzugsweise wird der Schlüssel in diesem Fall gegen ein Auslesen geschützt, beispielsweise indem er in einem nicht auslesbaren Bereich gespeichert wird.

Der Entschlüsselungsalgorithmus kann alternativ ein selbst entwickelter, also nicht aus dem Stand der Technik bekannter, Algorithmus sein oder auf einem solchen basieren. Dieser kann geschützt werden, indem er beispielsweise vorzugsweise in einem nicht auslesbaren Bereich gespeichert wird.

Zum Entschlüsseln oder Dekodieren der Software wird erfindungsgemäß ein Dekodierungsschlüssel benötigt, der ebenfalls nicht auslesbar im Boot-Loader hinterlegt bzw. gespeichert ist. Dieser Dekodierungsschlüssel kann vorliegend ausschließlich als Schlüssel zum Dekodieren der entsprechenden Software verstanden werden.

Es kann sich beim Dekodierungsschlüssel um einen anderen als den dem Stand der Technik entsprechenden öffentlichen Kodierungs- und nichtöffentlichen Dekodierungsschlüssel zum Datenaustausch beispielsweise über das Internet handeln.

Unter einer "ladbaren" Software kann erfindungsgemäß jedenfalls eine Software verstanden werden, die zunächst in einer beliebigen Form oder Format vorliegt, z.B. auf einer CD-ROM gespeichert oder auf einem Zentralrechner/Server per Internet-Verbindung abrufbar, und z.B. auf einem Rechnersystem in einer beliebigen Form speicherbar bzw. ladbar ist, etwa in einem Programm- oder Arbeitspeicher.

Unter einer nicht auslesbar vorliegenden Software kann erfindungsgemäß wenigstens eine Software verstanden werden, die nur unter bestimmten Bedingungen von einem Speicherbaustein ausgelesen werden kann.

Die Software kann zum Beispiel mittels einem "Flash", ausgelesen werden. Diese Bedingungen werden durch Zuweisen bestimmter Werte an bestimmte Speicheradressen im Speicherbaustein festgelegt. Die Programmiertechnik des Zuweisens von Werten an bestimmten Speicheradressen ist dem Fachmann im Einzelnen bekannt.

Beispielhaft für einen derartigen Speicherbaustein mit optionalem Zuweisen von Werten an bestimmten Speicherorten wird ein Chip mit einer Code-Read-Protection-Funktion vom Typ LPC24XX, beispielsweise "LPC2400 Flash" der Fa. NXP Semiconductors angegeben. Dieser Chip umfasst einen Code-Read-Protection ("CRP")-Mechanismus, welcher es dem Programmierer zum Zuweisen von Speicherwerten auf dem Chip erlaubt, unterschiedliche Sicherheitsstufen durch Zuweisen verschiedener Werte an einem festgelegten Speicherort ("0x000001FC") zu erzeugen. Dazu kann beispielsweise der Zugriff auf den Chip bzw. zum on-chip Flash und/oder die Verwendung des ISP ("In System Programming") beschränkt oder verhindert werden.

Diese Sicherheitsstufen können wie beim oben genannten Controller der Fa. NXP Semiconductors derart ausgestaltet sein, dass voneinander verschiedene, grundlegende Zugriffsmöglichkeiten auf die besagte Software bestehen können.

So kann beim oben genannten Controller der Fa. NXP Semiconductors beispielsweise eine Option CRP1 ausgewählt werden, in welcher der Zugriff auf den Chip über JTAG-pins verhindert wird. Ein partieller Flash update ist unter Verwendung bestimmter ISP-Befehle und Beschränkungen möglich.

Ferner kann beim oben genannten Controller der Fa. NXP Semiconductors ferner eine Option CRP2 gewählt werden, bei welcher der Zugriff auf den Chip über JTAG-pins verhindert wird und bestimmte ISP-Befehle wie "read memory" nicht möglich sind.

Weitere Code-Read-Protection-Optionen können beim oben genannten Controller ebenfalls ausgewählt werden. Hierzu und zu dem oben Ausgeführten wird auf das entsprechende Handbuch von NXP Semiconductors, UM10237, Kapitel 30: LPC2400 Flash, 2007, verwiesen. Der diesbezügliche Inhalt ist durch Bezugnahme hier aufgenommen.

In einer erfindungsgemäßen Ausführungsform weist der Controller einen Controllerchip auf, auf dem Software, auslesbar oder nicht auslesbar, gespeichert werden kann.

In einer weiteren erfindungsgemäßen Ausführungsform weist der Controller einen zusätzlichen Speicher (oder Speicherbaustein, Speicherchip) auf, auf dem Software, auslesbar oder nicht auslesbar, gespeichert werden kann.

Vorteilhafte Weiterentwicklungen der Erfindung sind jeweils Gegenstand der Unteransprüche.

In einer bevorzugten Ausführungsform wird sowohl der Entschlüsselungsalgorithmus als auch der Dekodierungsschlüssel bereits vor der ersten Inbetriebnahme des Rechnersystems im Boot-Loader einprogrammiert. Dies hat den Vorteil, dass der Anwender bzw. Endnutzer bereits alle notwendigen Voraussetzungen von Beginn an zur Verfügung hat. Alle Anwendungsmöglichkeiten der Software, unabhängig davon, ob es sich um ein Programm, eine Bibliothek oder eine Datei oder dergleichen handelt, können unmittelbar genutzt werden. Besonders bei medizinischen Geräten kann sich durch unvorhergesehene Ereignisse beispielsweise von Notfällen bei akuten medizinischen Indikationen die Situation ergeben, sofort auf bestimmte Programme zugreifen zu müssen. Diese Situationen werden von Anfang an berücksichtigt.

In einer weiteren bevorzugten Ausführungsform ist der Dekodierungsschlüssel derart individuell ausgestaltet, dass es sich von Dekodierungsschlüsseln für andere, baugleiche, insbesondere medizinische, Geräte unterscheidet. Damit ergibt sich eine eindeutige, individuelle Zuordnung von Dekodierungsschlüsseln zu jedem einzelnen Gerät. Dies hat u. a. den Vorteil, dass eine Verwechslungsgefahr, die beispielsweise bei medizinischen Geräten erhebliche Folgen haben kann, zuverlässig vermieden wird. Zudem ist sichergestellt, dass nur die für das jeweilige Gerät vorgesehene Software mit dem jeweiligen Dekodierungsschlüssel entschlüsselt werden kann; auf diese Weise ist auch eine unautorisierte Weitergabe von einmal erworbener Software eines Lizenznehmers an weitere Geräteeigentümer unterbunden. Somit kann wenigstens ein Umgehen des Erwerbs einer weiteren Softwarelizenz vermieden werden.

In einer weiteren bevorzugten Ausführungsform besteht die Software aus einem Anwendungsprogramm, das speziell für den jeweiligen Anwendungsfall des, insbesondere medizinischen, Gerätes entwickelt wurde bzw. genutzt werden kann. Diese Anwendungsprogramme unterscheiden sich erfindungsgemäß von übrigen Softwareprogrammen dadurch, dass sie auf anderen Rechnersystemen als jenen, für welche sie erstellt wurden, keine sinnvolle Anwendung haben. Oft sind sie darüber hinaus an bestimmte Hardwarekomponenten des Gerätes gekoppelt. Dennoch ist der Einsatz eines erfindungsgemäßen Entschlüsselungsalgorithmus und Dekodierungsschlüssels auch in solchen Fällen sinnvoll und vorteilhaft, da beispielsweise anhand dieser Anwendungsprogramme die Nutzung und Struktur der mit des Software betriebenen Gerätes nachvollzogen und ggf. kopiert werden kann, wenn sie nicht beispielsweise auf die erfindungsgemäße Weise geschützt werden kann. Im Folgenden gilt das, was zu "Anwendungsprogramm" ausgeführt wird auch für "Software", es sei denn, dass dies für den Fachmann erkennbar nicht zutrifft.

In einer weiteren bevorzugten Ausführungsform wird das verschlüsselte Anwendungsprogramm in einem Programmspeicher des Rechnersystems vorgehalten, bevorzugt gespeichert. Generell sind verschiedene Speichermöglichkeiten für ein Anwendungsprogramm sowohl innerhalb der Hardware des Rechnersystems selbst als auch auf zusätzlichen externen Speichermedien möglich. Das Speichern in einem fest vorgegebenen Hardware-Programmspeicher hat den Vorteil, eine Weiterverarbeitung, Übertragung in andere Speichermedien und/oder eine Entschlüsselung strukturiert vornehmen zu können, da dieser Programmspeicher eindeutig nach der jeweiligen Anwendung ausgelegt werden kann. Diese Auslegung kann die Speichergröße, die physische Qualität des Speichers als auch weitere technische Anforderungen beispielsweise bezüglich der Zugriffsgeschwindigkeit berücksichtigen.

In einer weiteren bevorzugten Ausführungsform weist das Rechnersystem mindestens eine Schnittstelle auf, die es erlaubt, ein Anwendungsprogramm zu ersetzen oder zu ergänzen, z.B. in Form eines "Update" oder "Upgrade". Dies hat den Vorteil, vollständige Softwareversionen oder einzelne Software-Updates problemlos und einfach übertragen zu können. Die Übertragung dieser Software kann vorteilhaft über eine ungesicherte, das heißt auch unverschlüsselte, Übertragungsstrecke erfolgen. Möglich sind ein Download via Internet, das Versenden per E-Mail vom Hersteller bzw. Programmierer zum Kunden bzw. Nutzer oder auch zum Servicetechniker vor Ort, weiterhin eine Übertragung per Speicherkarte, CD-ROM oder dergleichen. Eine Entschlüsselung ist während der Übertragung selbst oder danach nicht erforderlich und kann unterbleiben, vielmehr wird die Software verschlüsselt im Programmspeicher abgelegt. Auch eine Identifizierung bei einem externen Server, wie es dem Stand der Technik bei vielen Online-Updates entspricht, ist hier vorteilhaft nicht notwendig, da durch den Dekodierungsschlüssel des Boot-Loaders falsche oder durch Übertragung verfälschte Software verworfen wird.

In einer weiteren bevorzugten Ausführungsform wird das zunächst verschlüsselte Anwendungsprogramm vom Rechnersystem mittels entsprechender Einrichtungen vom Programmspeicher in den Boot-Loader übertragen und dekodiert, anschließend in einen weiteren Speicher übertragen. Der genaue Vorgang kann wie folgt ablaufen: Das Rechnersystem startet nach dem Einschalten mit den Anweisungen im Boot-Loader und beginnt das im Programmspeicher verschlüsselt hinterlegte Programm einzulesen. Anschließend werden die Daten mittels Entschlüsselungsalgorithmus und Dekodierungsschlüssel dekodiert und ggf. in einem weiteren Speicher abgelegt. Nach Beendigung dieses Vorgangs wird das entschlüsselte Anwendungsprogramm gestartet. Der weitere Speicher ist dabei in der Regel der Haupt- oder Arbeitsspeicher und besteht aus einem nicht-permanenten (flüchtigen) Speicher, dem Random Access Memory (RAM), der nach dem Abschalten oder Unterbrechen der Versorgungsspannung seinen Inhalt nicht abspeichert. Ein nachträgliches Auslesen des Programms ist damit vorteilhaft nicht möglich, somit auch nicht für Unbefugte.

Alternativ kann das Programm auch direkt aus dem Programmspeicher ausgeführt werden. Hierbei enthält entweder der Programmspeicher, der zum Beispiel auch durch eine programmierbare Logik wie ein FPGA (Field Programmable Gate Array) realisiert werden kann, oder der Controller eine Dekodiereinheit.

Der Dekodierungsschlüssel eines ersetzten oder ergänzten Anwendungsprogramms kann sich vom Dekodierungsschlüssel zur geschützten Übertragung in den Hauptspeicher unterscheiden. Dabei kann der erste Schlüssel mit einem externen Speicher (Speicherkarte, RFID, u. ä.) zur Verfügung gestellt werden, der interne Schlüssel zur Übertragung ist dagegen eine CPU (Central-Processing-Unit) spezifische Zahl, die bei der Produktion eingebrannt oder im Boot-Loader abgespeichert wird. Beide Verfahren können vor dem Auslesen geschützt werden und sind es vorzugsweise auch. Somit unterscheidet sich der ausgelesene Programmspeicher der unterschiedlichen Geräte auch bei gleichem, dort enthaltenem Anwendungsprogramm. Bei einem Software-Update wird die empfangene Anwendung zunächst mit dem einheitlichen Schlüssel in den Hauptspeicher dekodiert und dann mit dem CPU spezifischen Schlüssel im Programmspeicher abgelegt.

In einer weiteren bevorzugten Ausführungsform wird der Hauptspeicher mit dem entschlüsselten Programm mit nicht aufsteigenden Adressen beschrieben. Die Reihenfolge kann beispielsweise mit einer Zufallszahl verknüpft werden, zumindest einige Einträge können doppelt durchgeführt werden, oder es werden Unterbrechungen beim Beschreiben des Hauptspeichers eingelegt, um die Auswertung mit Logik-Analysatoren oder dergleichen zu erschweren. Eine zusätzliche Routine kann am Ende des Prozesses dafür sorgen, dass alle Adressen die korrekten Daten enthalten (z.B. durch einen Test auf leere Speicherstellen). Nach dem Ladevorgang befindet sich das Programm im Hauptspeicher in der korrekten Reihenfolge seiner einzelnen Abschnitte zueinander. Da dabei die Zeit zwischen dem Einschalten des Rechnersystems und endgültiger Betriebsbereitschaft nicht zu lange gehalten wird, ist die Akzeptanz beim Anwender nicht gefährdet.

In einer weiteren bevorzugten Ausführungsform wird das im Programmspeicher verschlüsselte Programm nicht in der ursprünglichen Reihenfolge abgelegt, sondern in einer beliebigen Einteilung in Blöcken. Der Boot-Loader kann dabei die entsprechende Sequenz der Einteilung der Blöcke speichern. Die korrekte Aufeinanderfolge oder Sequenz kann dabei allein dem Boot-Loader bekannt sein.

Die erfindungsgemäße Aufgabe wird auch gelöst durch ein Rechnersystem mit den Merkmalen des Anspruchs 10.

Erfindungsgemäß wird ein weiteres Rechnersystem zur Lösung derselben Aufgabe vorgeschlagen mit einem Boot-Loader, das ein Speichermedium, bei welchem es sich bevorzugt um den Boot-Loader oder ein Speichermedium, welches den Boot-Loader aufweist, handeln kann, mit mindestens einem nicht auslesbaren oder nicht kopierbaren bzw. kopiergeschützten Entschlüsselungsalgorithmus für eine Software aufweist, sowie mindestens einem nicht auslesbaren oder kopiergeschützten Dekodierungsschlüssel für diese Software, der sich auf einem Speichermedium befindet, welches sich vom Boot-Loader unterscheidet oder diesen nicht aufweist.

Der Dekodierungsschlüssel kann beispielsweise über ein Dekodierungsschlüssel-Lesegerät bereitgestellt werden. Der Dekodierungsschlüssel kann auf einer Smartcard, einem RFID Tag oder ähnlichem gespeichert sein. Das Speichermedium für den Dekodierungsschlüssel ist kopiergeschützt. Zum Dekodieren der Software werden der Dekodierungsschlüssel und der im Boot-Loader abgelegte Entschlüsselungsalgorithmus benötigt.

In einer weiteren bevorzugten Ausführungsform wird der Entschlüsselungsalgorithmus nicht im Boot-Loader abgelegt, sondern in einem Programmspeicher. In diesem Fall muss der Entschlüsselungsalgorithmus vorteilhaft nicht gegen Auslesen geschützt sein.

Wie zuvor gilt auch hier, dass der Entschlüsselungsalgorithmus aus dem Stand der Technik bekannt sein kann; in diesem Fall muss er nicht in einem gesperrten Bereich abgelegt werden, er kann dort jedoch optional abgelegt werden. Vorzugsweise wird der Schlüssel in diesem Fall gegen ein Auslesen geschützt, beispielsweise indem er in einem nicht auslesbaren Bereich gespeichert wird.

Der Entschlüsselungsalgorithmus kann alternativ ein selbst entwickelter, also nicht aus dem Stand der Technik bekannter, Algorithmus sein oder auf einem solchen basieren. Dieser kann geschützt werden, indem er beispielsweise in einem nicht auslesbaren Bereich gespeichert wird.

Unter "nicht auslesbar" im Sinne mancher erfindungsgemäßer Ausführungsformen der vorliegenden Erfindung wird die Verwendung von Speicherbausteinen verstanden, mit denen das Auslesen der programmierten und gespeicherten Software (nach Verlassen des Werks, d.h. der Produktionsumgebung) nicht mehr möglich ist. Folglich müssen entsprechende Speicherbausteine verwendet werden, die diese Funktion erfüllen.

In einer bevorzugten Ausführungsform des zuletzt beschriebenen Rechnersystems wird die Software mittels geeigneter Einrichtungen erfindungsgemäß unverschlüsselt im Controllerchip gespeichert. Diese Ausführungsform wird dadurch ermöglicht, dass die Software nicht auslesbar ist. Ein hiermit verbundener Vorteil besteht in einer weiteren Vereinfachung der Programmierung und Ausführbarkeit des Programms, da keine Entschlüsselung vor dem Start des Programms notwendig ist. Letzteres kann vorteilhaft die Ladegeschwindigkeit des Programms erhöhen.

In einer weiteren bevorzugten Ausführungsform des zuletzt beschriebenen Rechnersystems weist dieses eine externe Geräteschnittstelle zum Verändern oder Ersetzen des Anwendungsprogramms bzw. der Software allgemein auf. Eine Veränderung ist beispielsweise ein Software-Update. Die Dekodierung des Updates erfolgt intern im Controllerchip. Der sich jetzt im Controllerchip befindliche Programmspeicher wird dabei aktualisiert.

Die mit den erfindungsgemäßen Rechnersystemen in ihren verschiedenen Ausgestaltungen und bevorzugten Ausführungsformen erzielbaren Vorteile umfassen u. a. einen Schutz gegen unerlaubtes Kopieren von Software. Bei dieser kann auf eine Verschlüsselung verzichtet werden, so dass sie unbesorgt über öffentlich zugängliche Verteilerwege (z.B. also eine Downloadoption im Internet oder per E-Mail-Versand) erhältlich sein kann. Kosten und Mühen für einen aufwändigen - und letztlich oftmals dennoch frustranen - Versuch der Kontrolle können vorteilhaft eingespart werden. In manchen Ausführungsformen ist aufgrund der Verschlüsselung ein Auslesen der Software und die Möglichkeit eines Reengineerings verhindert. Die für die Software erforderliche Sicherheit bei ihrem Ablaufen im Gerät kann mittels der vorliegenden Erfindung ferner vorteilhaft sichergestellt werden. Ein weiterer Vorteil der Erfindung besteht darin, dass die Übertragung der Software wahlweise online oder offline erfolgen kann. Das verwendete Speichermedium zum Übertragen ist dabei beliebig. Eine Vorab-Identifikation beim Server, Versender oder dergleichen ist erfindungsgemäß nicht erforderlich. Aus dem Boot-Loader ist der Entschlüsselungsalgorithmus nicht auslesbar. Damit ist es vorteilhaft gegen ein Kopieren oder "Knacken" geschützt.

Die erfindungsgemäße Aufgabe wird ebenfalls gelöst durch ein Verfahren mit den Merkmalen des Anspruchs 14 zum Ersetzen oder Ergänzen einer Software, insbesondere eines Anwendungsprogramms, für eine Vorrichtung bzw. ein Gerät mit den Merkmalen des Anspruchs 1. Sie wird ferner gelöst durch eine Vorrichtung mit den Merkmalen des Anspruchs 15. Mittels der erfindungsgemäßen Verfahren und der erfindungsgemäßen Vorrichtung lassen sich die mittels des erfindungsgemäßen Rechnersystems erzielbaren Vorteile ungeschmälert erzielen. Daher wird an dieser Stelle zur Vermeidung von Wiederholungen ausdrücklich auf deren Diskussion verwiesen.

Die vorliegende Erfindung wird exemplarisch anhand der beiliegenden Zeichnung erläutert. Gleiche Bezugszeichen bezeichnen dabei gleiche oder ähnliche Komponenten. In der Zeichnung gilt:
- Fig. 1: zeigt eine erfindungsgemäße Vorrichtung mit einem Rechnersystem mit einem Boot-Loader mit Entschlüsselungsalgorithmus und Dekodierungsschlüssel, einem Programmspeicher mit einer ladbaren Software und einem Hauptspeicher;
- Fig. 2: zeigt zwei Vorrichtungen, die jeweils ein Rechnersystem mit unterschiedlichen Dekodierungsschlüsseln enthalten, welche ansonsten baugleich sind;
- Fig. 3: zeigt eine erfindungsgemäße Vorrichtung mit einem Rechnersystem, das eine Schnittstelle zum Ersetzen oder Ergänzen des Anwendungsprogramms, sowie ein weiteres Speichermedium mit einem Dekodierungsschlüssel enthält; und
- Fig. 4: zeigt eine erfindungsgemäße Vorrichtung mit einem Rechnersystem, das einen Controllerchip mit einem Anwendungsprogramm, sowie eine Geräteschnittstelle aufweist.

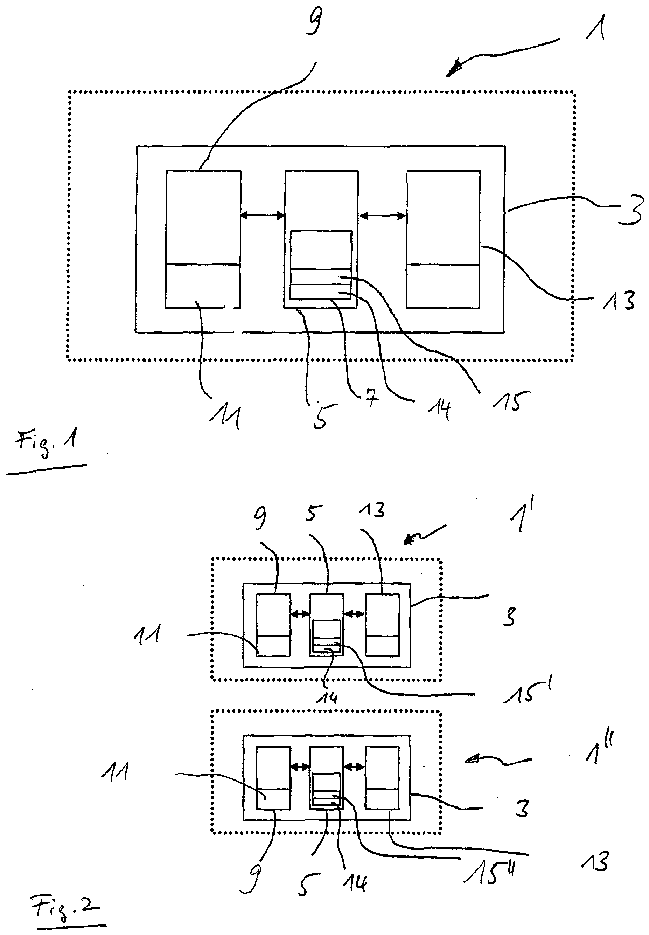

Fig. 1 zeigt eine erfindungsgemäße Vorrichtung 1, welche als ein medizinisches oder anderes Gerät ausgestaltet ist, mit einem Rechnersystem 3. Das Rechnersystem 3 weist einen Controller 5, in dem ein Boot-Loader 7 enthalten ist, einen Programmspeicher 9, in dem eine Software 11, beispielsweise ein Anwendungsprogramm, enthalten ist, sowie einen Hauptspeicher 13, der als Arbeitsspeicher ausgestaltet sein kann, auf. Im Boot-Loader 7 sind ein nicht auslesbarer Entschlüsselungsalgorithmus 14 sowie ein nicht auslesbarer Dekodierungsschlüssel 15 gespeichert. Die drei Bauelemente Controller 5, Programmspeicher 9 und Hauptspeicher 13 sind beispielsweise zum Datenaustausch miteinander verbunden.

Fig. 2 zeigt zwei baugleiche, als medizinische Geräte ausgestaltete Vorrichtungen 1' und 1", die jeweils ein Rechnersystem 3 aufweisen. Die Rechnersysteme 3, die jeweils wieder die drei Bauelemente Controller 5, Programmspeicher 9 und Hauptspeicher 13 enthalten, unterscheiden sich zumindest durch zwei verschiedene Dekodierungsschlüssel 15' und 15".

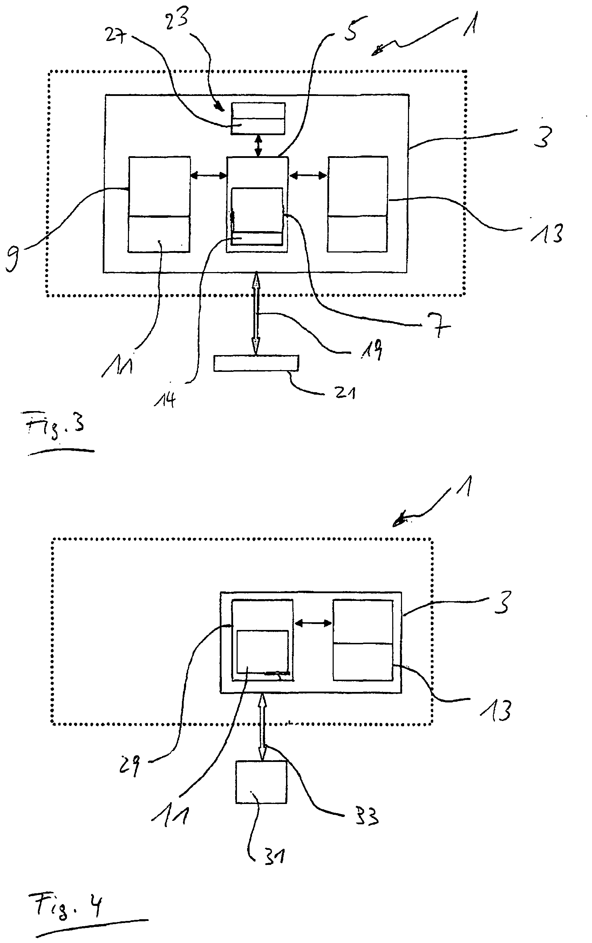

Fig. 3 zeigt ein medizinisches Gerät 1 mit einem Rechnersystem 3, das eine Schnittstelle 19 zum Ersetzen oder Ergänzen eines Anwendungsprogramms 21 aufweist. Das Rechnersystem 3 der Fig. 3 weist wie jene Rechnersysteme der vorangegangenen Figuren wiederum je einen Controller 5, einen Programmspeicher 9 und einen Hauptspeicher 13 auf. Der Controller 5 weist in Fig. 3 erkennbar einen Entschlüsselungsalgorithmus 14, nicht jedoch auch einen Dekodierungsschlüssel auf. Stattdessen ist ein weiteres Speichermedium 23 vorgesehen, in welchem ein kopiergeschützter Dekodierungsschlüssel 27 gespeichert ist. Das weitere Speichermedium 23 kann mit dem Controller 5 in Verbindung stehen.

Fig. 4 zeigt ein medizinisches Gerät 1 mit einem Rechnersystem 3, das zumindest einen Controllerchip 29 mit einer Software 11, insbesondere einem Anwendungsprogramm, aufweist. Im Rechnersystem 3 kann weiterhin ein Hauptspeicher 13 enthalten sein. Weiterhin zeigt Fig. 4 eine Software 31 und eine externe Geräteschnittstelle 33, die ein Ersetzen der sich im Controllerchip 29 befindlichen Software 11 durch die Software 31 auf bekannte Weise ermöglicht.

## Patentansprüche

1. Medizinische Vorrichtung (1) aufweisend ein Rechnersystem (3) mit einem Boot-Loader (7) zum Verwenden der medizinischen Vorrichtung (1) unter Einsatz wenigstens einer ladbaren Software (11), wobei der Boot-Loader (7) wenigstens einen nicht auslesbaren Entschlüsselungsalgorithmus (14) für die Software (11) aufweist,
**dadurch gekennzeichnet, dass**
der Boot-Loader (7) weiterhin wenigstens einen nicht auslesbaren Dekodierungsschlüssel (15) aufweist.

2. Medizinische Vorrichtung nach Anspruch 1, bei welchem der Entschlüsselungsalgorithmus (14) und der Dekodierungsschlüssel (15) vor Erstinbetriebnahme des den Boot-Loader (7) aufweisenden Abschnitts des Rechnersystems (3) im Boot-Loader (7) einprogrammiert sind.

3. Medizinische Vorrichtung nach einem der Ansprüche 1 oder 2, bei welchem sich der Dekodierungsschlüssel (15') von Dekodierungsschlüsseln (15") für andere baugleiche, medizinische Vorrichtungen (1', 1") und/oder Gerätegruppen hiervon unterscheidet.

4. Medizinische Vorrichtung nach einem der vorangegangenen Ansprüche, bei welchem die Software (11) ein Anwendungsprogramm ist.

5. Medizinische Vorrichtung nach einem der vorangegangenen Ansprüche, wobei das Rechnersystem (3) einen Programmspeicher (9) aufweist, in welchem das Anwendungsprogramm verschlüsselt vorliegt oder gespeichert ist.

6. Medizinische Vorrichtung nach einem der vorangegangenen Ansprüche, wobei das Rechnersystem (3) wenigstens eine Schnittstelle (19) zum Ersetzen und/oder Ergänzen der Software oder des Anwendungsprogramms (21) aufweist.

7. Medizinische Vorrichtung nach einem der vorangegangenen Ansprüche, wobei das Rechnersystem (3) jeweils eine Einrichtung zum Übertragen der verschlüsselten Software (11), insbesondere des Anwendungsprogramms, vom Programmspeicher (9) in den Boot-Loader (7), zum Dekodieren der Software (11) mittels Entschlüsselungsalgorithmus (14) und Dekodierungsschlüssel (15), und zum anschließenden Abspeichern der Software (11) in einen weiteren Speicher oder in einen Hauptspeicher (13) aufweist.

8. Medizinische Vorrichtung nach einem der vorangegangenen Ansprüche, wobei das Rechnersystem (3) eine Einrichtung zum Übertragen der Software (11) oder des Anwendungsprogramms, in einen weiteren Speicher oder einen Hauptspeicher (13), unter dessen Beschreiben mit nicht aufsteigenden Adressen aufweist.

9. Medizinische Vorrichtung nach einem der vorangegangenen Ansprüche, wobei das Rechnersystem (3) eine Einrichtung zum Speichern der Software (11) oder des Anwendungsprogramms, in einer Weise, welche nicht der ursprünglichen Einteilung der Blöcke im Programmspeicher (9) entspricht, aufweist.

10. Medizinische Vorrichtung (1) aufweisend ein Rechnersystem (3) mit einem Boot-Loader (7) zum Verwenden der medizinischen Vorrichtung (1) unter Einsatz wenigstens einer ladbaren Software (11) oder eines Anwendungsprogramms,
**gekennzeichnet durch**
wenigstens ein Speichermedium, welches insbesondere als Boot-Loader (7) ausgestaltet ist oder diesen aufweist, auf welchem wenigstens ein Entschlüsselungsalgorithmus (14) für die Software (11) gespeichert ist, und
wenigstens ein weiteres, sich vom Boot-Loader (7) oder von dem den Boot-Loader (7) aufweisenden Speichermedium unterscheidendes, Speichermedium (23), auf welchem wenigstens ein nicht auslesbarer oder kopiergeschützter Dekodierungsschlüssel (27) gespeichert ist.

11. Medizinische Vorrichtung nach Anspruch 10, wobei der Entschlüsselungsalgorithmus (14) für die Software (11) kopiergeschützt oder nicht auslesbar ist.

12. Medizinische Vorrichtung nach Anspruch 10 oder 11, wobei das Speichermedium (23) der Boot-Loader (7) ist.

13. Medizinische Vorrichtung nach einem der Ansprüche 10 bis 12, wobei ein Programmspeicher (9) des Rechnersystems (3) wenigstens einen Entschlüsselungsalgorithmus (14) für die Software (11) enthält.

14. Verfahren zum Ersetzen oder Ergänzen einer Software (11) einer medizinischen Vorrichtung (1)
**gekennzeichnet durch** den Schritt
Verwenden eines Rechnersystems (3) einer medizinischen Vorrichtung nach einem der Ansprüche 1 bis 13.

15. Medizinische Vorrichtung (1) nach einem der Ansprüche 1 bis 13, wobei die Vorrichtung (1) als Behandlungsvorrichtung oder Blutbehandlungsvorrichtung ausgestaltet ist.

## Claims

1. A medical apparatus (1) comprising a computer system (3) equipped with a boot-loader (7) to operate the medical apparatus (1) using at least one loadable software (11), the boot-loader (7) comprising at least one not-readable decryption algorithm (14) for the software (11),
**characterized in that**
the boot-loader (7) furthermore comprises at least one not-readable decoding key (15).

2. The medical apparatus according to claim 1, in which the decryption algorithm (14) and the decoding key (15) are programmed into the boot-loader (7) before the section of the computer system (3) comprising the boot-loader (7) is put into operation for the first time.

3. The medical apparatus according to anyone of claims 1 or 2, in which the decoding key (15') differs from decoding keys (15") for other medical apparatuses (1', 1") of identical construction and/or for equipment groups.

4. The medical apparatus according to anyone of the preceding claims, in which the software (11) is an application program.

5. The medical apparatus according to anyone of the preceding claims, wherein the computer system (3) comprises a program memory (9) in which the application program is present or stored in encrypted form.

6. The medical apparatus according to anyone of the preceding claims, wherein the computer system (3) comprises at least one interface (19) for replacing and/or supplementing the software or the application program (21).

7. The medical apparatus according to anyone of the preceding claims, wherein the computer system (3) respectively comprises a device for transferring the encrypted software (11), in particular the application program, from the program memory (9) into the boot-loader (7), in order to decode the software (11) by means of the decryption algorithm (14) and the decoding key (15), and to subsequently store the software (11) in a further memory or in a main memory (13).

8. The medical apparatus according to anyone of the preceding claims, wherein the computer system (3) comprises a device for transferring the software (11) or the application program, into a further memory or a main memory (13), during its writing with non-increasing addresses.

9. The medical apparatus according to anyone of the preceding claims, wherein the computer system (3) comprises a device for storing the software (11) or the application program, in a manner which does not correspond to the original division of the blocks in the program memory (9).

10. A medical apparatus (1) comprising a computer system (3) having a boot-loader (7) for utilizing the medical apparatus (1) under use of at least one loadable software (11) or of an application program,
**characterized by**
at least one storage medium, designed in particular as a boot-loader (7) or comprising such one, on which at least one decryption algorithm (14) for the software (11) is stored, and
at least one further storage medium (23) different from the boot-loader (7) or from the storage medium comprising the boot-loader (7), on which at least one not-readable or one copy-protected decoding key (27) is stored.

11. The medical apparatus according to claim 10, wherein the decryption algorithm (14) for the software (11) is copy-protected or not-readable.

12. The medical apparatus according to claim 10 or 11, wherein the storage medium (23) is the boot-loader (7).

13. The medical apparatus according to anyone of claims 10 to 12, wherein a program memory (9) of the computer system (3) contains at least one decryption algorithm (14) for the software (11).

14. A method for replacing or supplementing a software (11) of a medical apparatus (1)
**characterized by** the step of:
using a computer system (3) of a medical apparatus according to anyone of claims 1 to 13.

15. The medical apparatus (1) according to anyone of claims 1 to 13, wherein the apparatus (1) is designed as a treatment apparatus or as a blood treatment apparatus.

## Revendications

1. Un appareil médical (1) comprenant un système informatique (3) doté d'un chargeur de démarrage (7) pour utiliser l'appareil médical (1) au moyen d'au moins un logiciel chargeable (11), le chargeur de démarrage (7) comprenant au moins un algorithme de décryptage non-lisible (14) pour le logiciel (11),
**caractérisé en ce que**
le chargeur de démarrage (7) comprend en outre au moins une clé de décodage non-lisible (15).

2. L'appareil médical selon la première revendication, dans lequel l'algorithme de décryptage (14) et la clé de décodage (15) sont programmés dans le chargeur de démarrage (7) avant que la partie du système informatique (3) comprenant le chargeur de démarrage (7) ne soit mise en service pour la première fois.

3. L'appareil médical selon l'une quelconque des revendications 1 ou 2, dans lequel la clé de décodage (15') diffère des clés de décodage (15") pour d'autres appareils médicaux (1', 1") de construction identique et/ou pour des groupes d'équipement.

4. L'appareil médical selon l'une quelconque des revendications précédentes, dans lequel le logiciel (11) est un programme d'application.

5. L'appareil médical selon l'une quelconque des revendications précédentes, où le système informatique (3) comprend une mémoire de programme (9) dans laquelle le programme d'application est présent ou stocké sous forme cryptée.

6. L'appareil médical selon l'une quelconque des revendications précédentes, où le système informatique (3) comprend au moins une interface (19) pour remplacer et/ou compléter le logiciel ou le programme d'application (21).

7. L'appareil médical selon l'une quelconque des revendications précédentes, où le système informatique (3) comprend respectivement un dispositif permettant de transférer le logiciel crypté (11), notamment le programme d'application, de la mémoire de programme (9) dans le chargeur de démarrage (7), afin de décoder le logiciel (11) au moyen de l'algorithme de décryptage (14) et de la clé de décodage (15), et de stocker par la suite le logiciel (11) dans une autre mémoire ou dans une mémoire principale (13) .

8. L'appareil médical selon l'une quelconque des revendications précédentes, où le système informatique (3) comprend un dispositif permettant de transférer le logiciel (11) ou le programme d'application, dans une autre mémoire ou dans une mémoire principale (13), lors de son écriture avec des adresses non-croissantes.

9. L'appareil médical selon l'une quelconque des revendications précédentes, où le système informatique (3) comprend un dispositif permettant de stocker le logiciel (11) ou le programme d'application, d'une manière qui ne correspond pas à la division d'origine des blocs dans la mémoire de programme (9).

10. Un appareil médical (1) comprenant un système informatique (3) doté d'un chargeur de démarrage (7) pour utiliser l'appareil médical (1) au moyen d'au moins un logiciel chargeable (11) ou d'un programme d'application,
**caractérisé par**
au moins un support de stockage, conçu notamment comme un chargeur de démarrage (7) ou en comprenant un, sur lequel est stocké au moins un algorithme de décryptage (14) pour le logiciel (11), et
au moins un autre support de stockage (23) différent du chargeur de démarrage (7), ou du support de stockage comprenant le chargeur de démarrage (7), dans lequel est stocké au moins une clé de décodage (27) non-lisible ou protégée contre la copie.

11. L'appareil médical selon la revendication 10, où l'algorithme de décryptage (14) pour le logiciel (11) est protégé contre la copie ou non-lisible.

12. L'appareil médical selon la revendication 10 ou 11, où le support de stockage (23) est le chargeur de démarrage (7).

13. L'appareil médical selon l'une quelconque des revendications 10 à 12, où la mémoire de programme (9) du système informatique (3) contient au moins un algorithme de décryptage (14) pour le logiciel (11).

14. Un procédé pour remplacer ou compléter un logiciel (11) d'un appareil médical (1)
**caractérisé par** l'étape suivante:
l'utilisation d'un système informatique (3) d'un appareil médical selon l'une quelconque des revendications 1 à 13.

15. L'appareil médical (1) selon l'une quelconque des revendications 1 à 13, où l'appareil (1) est conçu sous la forme d'un appareil de traitement ou sous la forme d'un appareil de traitement du sang.
